# EUROPEAN PATENT SPECIFICATION

(11) **EP 1 676 514 B1**
(45) Date of publication and mention of the grant of the patent: **02.07.2014**
(21) Application number: 05110345.5
(22) Date of filing: 04.11.2005
(51) Int. Cl.: A47L 9/14, A47L 9/19

(54) **Vacuum cleaner**
Staubsauger
Aspirateur

(30) Priority: 04.01.2005 KR 2005000490
(43) Date of publication of application: 05.07.2006
(73) Proprietor: LG Electronics Inc., Seoul 150-721 (KR)
(72) Inventor: Yang, Hae Seock, Changwon-si, Gyeongsangnam-do (KR); Yoo, Myung Sig, Changwon-si Gyeongsangnam-do (KR); Lee, Sang In 701-902, Booyoung Apt.,, Jangyu-meon, Gimhae-si Gyeongsangnam-do (KR); Koh, Moo Hyon, Changwon-si Gyeongsangnam-do (KR); Park, Jae Yong, Changwon-si Gyeongsangnam-do (KR)
(74) Representative: Henkel, Breuer & Partner

(56) References cited:
- FR-A1- 2 844 697
- JP-A- 2003 153 838
- US-A1- 2002 174 774
- US-A1- 2003 208 878

## Description

### BACKGROUND OF THE INVENTION

### Field of the Invention

The present invention relates to a vacuum cleaner according to the preamble portion of Claim 1. Although the present invention is suitable for a wide scope of applications, it is particularly suitable for providing a facilitated configuration in using the vacuum cleaner.

### Discussion of the Related Art

Generally, a vacuum cleaner according to the present invention includes an intake nozzle sucking particles such as dust and the like stacked on a room floor, a cleaner body provided with a dust collecting container separating to collect the particles, and a connecting pipe guiding the particles sucked via the intake nozzle to the cleaner body.

In this case, an air intake device generating an air-sucking force is provided to the cleaner body. And, a dust collecting container accommodating part is provided to a prescribed portion of the cleaner body to accommodate the dust collecting container.

Recently, a cyclone dust collector separating particles according to a cyclone principle is generalized as a dust collector.

An action of the above-configured related art vacuum cleaner is explained as follows.

First of all, once the external particles are sucked via the intake nozzle together with air, the particles are introduced into the cyclone dust collector of the cleaner body via the connecting pipe.

The particles introduced into the dust collector spirally flow within the dust collector to be separated by a centrifugal force. The separated particles are stored in a lower part of the dust collector. And, the purified particle-free air is discharged outside the cleaner body.

If a prescribed quantity of the particles are collected in the dust collector, a user detaches the dust collector from the cleaner body, empties the dust collector and then attaches the dust collector to the cleaner body to use.

However, since a user is unable to externally observe a quantity of the particles collected and stored in the dust collector of the above-configured related art vacuum cleaner, the dust collecting performance of the vacuum cleaner is degraded due to the excessive quantity of the particles stored in the dust collector.

JP 2003-153838A discloses a vacuum cleaner with a dust collecting container in the form of a paper bag accommodated in a cleaner body of the vacuum cleaner. A part of the vacuum cleaner body is formed of a transparent member so as to able to see the dust collecting bag from outside.

FR 2844697 A1 discloses another vacuum cleaner with a can-type dust collecting container accommodated in a cleaner body of the vacuum cleaner. The dust collecting container is formed of a transparent outer wall and the cleaner is provided with an opening shielded by a transparent shield window and arranged so as to allow viewing of the dust collecting container content from outside.

### SUMMARY OF THE INVENTION

Accordingly, the present invention is directed to a vacuum cleaner that substantially obviates one or more problems due to limitations and disadvantages of the related art.

An object of the present invention is to provide a vacuum cleaner, by which a quantity of dust collected in a dust collector can be checked.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a vacuum cleaner according to the present invention includes the features of claim 1.

Preferably, the dust collecting container accommodating part is provided to a front side of the cleaner body to have an entrance provided to an upper end of the dust collecting container accommodating part so that the dust collecting container is loaded from an upper part of the dust collecting container accommodating part.

More preferably, a pair of the openings are symmetrically provided to right and left lateral sides of the cleaner body, respectively. More preferably, the cleaner body further includes a hose connecting part provided to an upper front side of the cleaner body to be connected to a hose making an intake nozzle communicate with a dust collector loaded in the cleaner body.

In the invention, the at least one shield window is replaceable to be provided to the at least one opening.

Preferably, the at least one shield window has a prescribed curvature.

Preferably, the dust collecting container includes a lower panel configuring a bottom of the dust collecting container to support the particles collected within the dust collecting container wherein the lower panel can be opened/closed.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:
FIG. 1 is a perspective diagram of a cleaner body of a vacuum cleaner according to the present invention;
FIG. 2 is an exploded perspective diagram of a cleaner body and a dust collector provided to a vacuum cleaner according to the present invention;
FIG. 3 is a cross-sectional diagram of a dust collector provided to a vacuum cleaner according to one embodiment of the present invention;
FIG. 4 is a perspective diagram of a dust collecting container provided to the dust collector shown in FIG. 3;
FIG. 5 is a perspective diagram of a dust collecting container cover provided to the dust collector according to one embodiment of the present invention shown in FIG. 3; and
FIG. 6 is a perspective diagram of a shield window separated from the cleaner body shown in FIG. 1.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

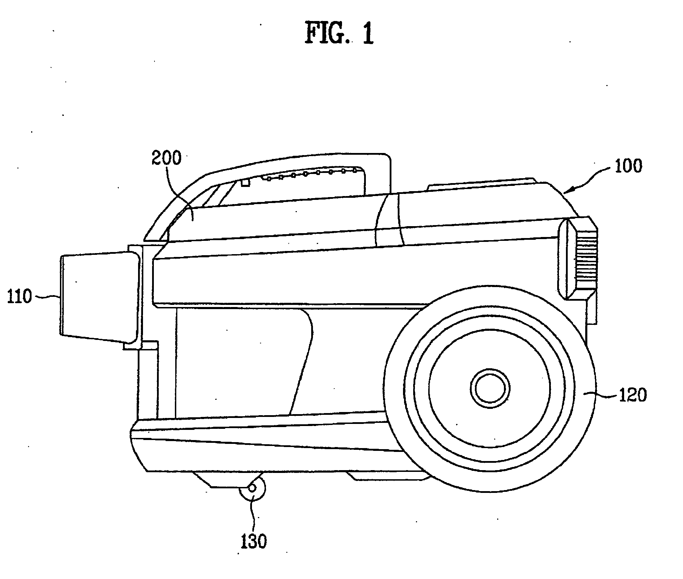

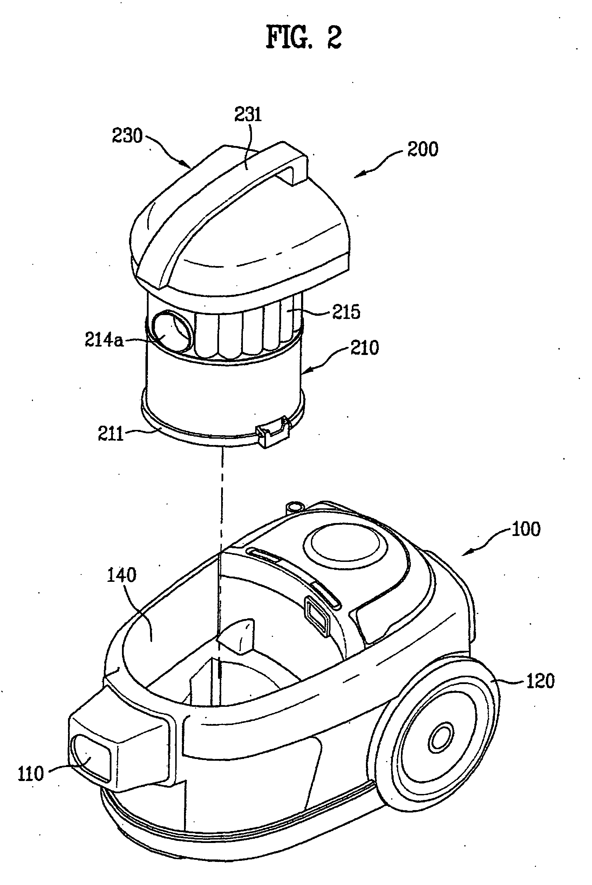

A canister type vacuum cleaner as one embodiment of a vacuum cleaner according to the present invention is explained with reference to FIG. 1 and FIG. 2 as follows.

FIG. 1 is a perspective diagram of a cleaner body of a vacuum cleaner according to the present invention and FIG. 2 is an exploded perspective diagram of a cleaner body and a dust collector provided to a vacuum cleaner according to the present invention.

Referring to FIG. 1 and FIG. 2, a vacuum cleaner according to the present invention includes an intake nozzle (not shown in the drawings) moving along a room floor to be cleaned to suck air containing particles, a cleaner body 100 provided separate from the intake nozzle, and a connecting pipe (not shown in the drawings) connecting the intake nozzle to the cleaner body 100 to guide the polluted air sucked via the intake nozzle to the cleaner body 100.

In this case, a nozzle inlet (not shown in the drawing) having a prescribed size is provided to a bottom of the intake nozzle to suck dust piled up on the room floor and the air by an air intake force generated from an air intake device built in the cleaner body 100.

And, in the cleaner body 100, an electronic part controlling the vacuum cleaner and a motor-fan assembly configuring the air intake device are built.

In particular, a hose connecting part 110 connected to the connecting pipe is provided to an upper front end of the cleaner body 100, wheels 120 are rotatably provided to both rear sides of the cleaner body 100 to enable the cleaner body 100 to smoothly move on the room floor, respectively, and a caster 130 as a rotating member for changing a direction of the cleaner body 100 is connected to a front bottom of the cleaner body 100.

A dust collector 200 is detachably provided to the cleaner body 100. The dust collector 200 plays a role in collecting dust by separating particles from the air introduced into the dust collector 200 via the intake nozzle and the connecting pipe.

The air discharged from the dust collector 200 is discharged to a rear side of the cleaner body 100 via a prescribed passage configured within the cleaner body 100 and the motor-fan assembly (not shown in the drawing) .

Meanwhile, the connecting pipe includes an extension pipe formed of a hard material to have one end connected to the intake nozzle, a flexible hose having one end connected to the other end of the extension pipe and the other end connected to the hose connecting part provided to the front side of the cleaner body 100, and an extension pipe grip provided to the other end of the extension pipe.

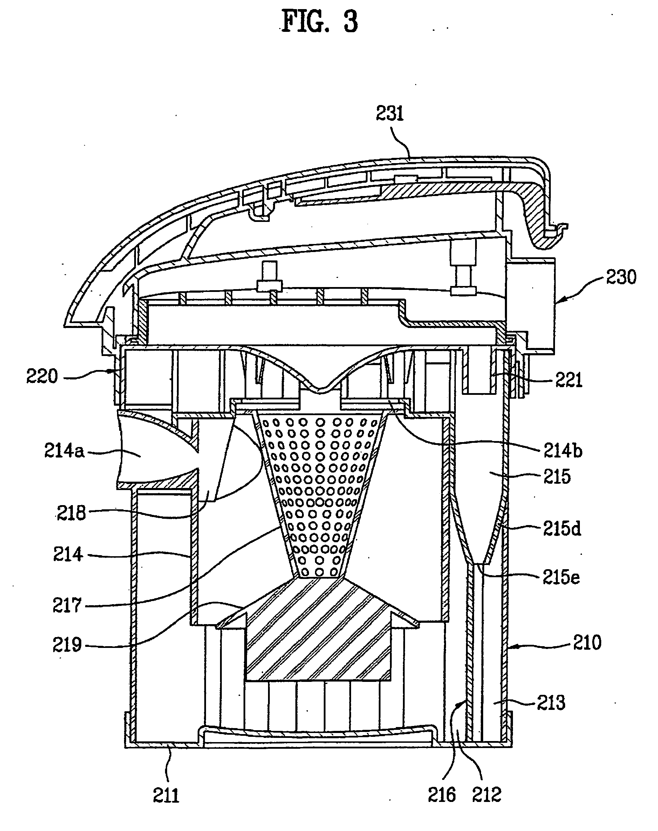

An example of a dust collector 200 provided to a vacuum cleaner according to the present invention is explained with reference to FIGs. 3 to 5 as follows.

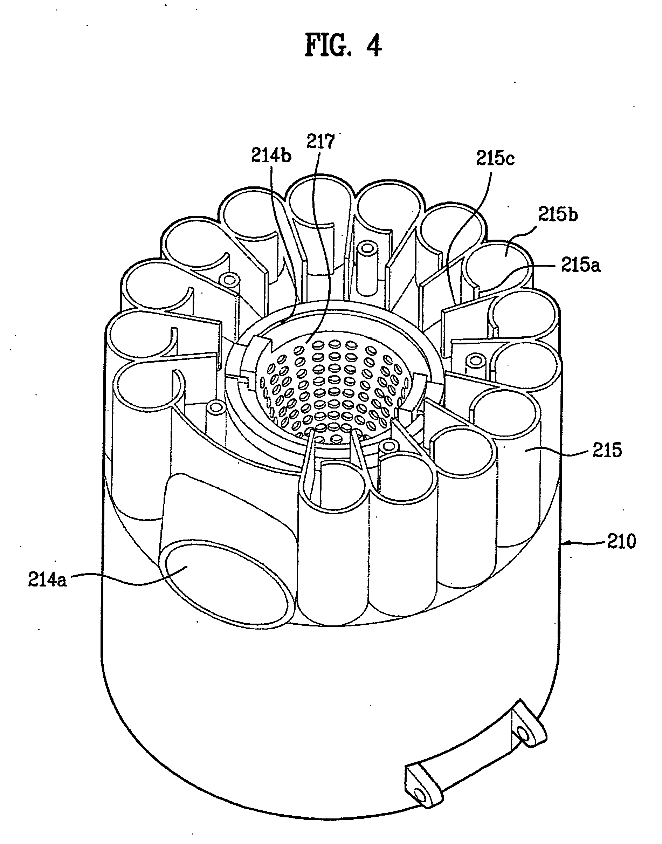

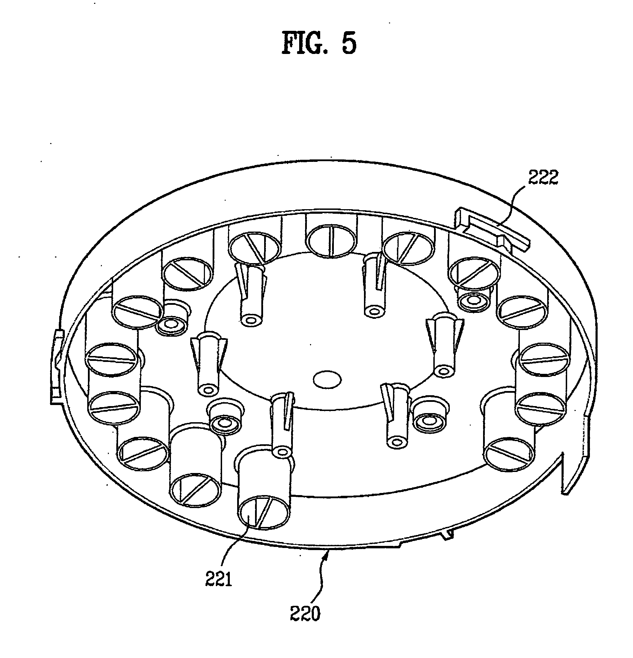

FIG. 3 is a cross-sectional diagram of a dust collector provided to a vacuum cleaner according to one embodiment of the present invention, FIG. 4 is a perspective diagram of a dust collecting container provided to the dust collector shown in FIG. 3, and FIG. 5 is a perspective diagram of a dust collecting container cover provided to the dust collector according to one embodiment of the present invention shown in FIG. 3.

Referring to FIGs. 3 to 5, a dust collector 200 includes a dust collecting container 210 separating to collect particles such as dust and the like, a dust collecting container cover 220 opening/closing one end of the dust collecting container 210, and more particularly, an upper end of the dust collecting container 210, and an upper cover 230 detachably assembled to the dust collecting container cover 220 to have a grip 231 at its upper surface.

In this case, a primary dust collecting part and a secondary dust collecting part are provided within the dust collecting container 210 to separate and collect particles such as dust and the like. And, a bottom of the dust collecting container 210 includes a lower panel 211 that can be opened/closed to support the dust stored inside. And, the dust collecting container 210 has an approximately cylindrical shape.

The primary dust collecting part includes a primary dust separating part and a primary dust storing part 212. And, the primary dust separating part substantially includes a cylindrical receptacle provided within the dust collecting container 210.

And, the secondary dust collecting part includes a secondary dust separating part separating the particles again from the air discharged from the primary dust collecting part and a secondary dust storing part 213.

In the present invention, the primary dust separating part includes a primary cyclone 214 separating particles by a cyclone system, while the secondary dust separating part includes a plurality of small secondary cyclones 215 provided along a circumference of the primary cyclone 214.

In particular, the primary cyclone 214 has a cylindrical receptacle shape of which lower end is open. A first inlet 214a communicating with the hose connecting part 110 is provided to an upper lateral side of the primary cyclone 214. And, a first outlet 214b perforated in a vertical direction is formed at a center of a ceiling of the primary cyclone 214.

In this case, the first inlet 214a guides the polluted air introduced from outside in a tangential direction of an inner wall of the primary cyclone 214. Hence, the air introduced into the first inlet 214a can flow spirally along the inner wall of the primary cyclone 214.

A plurality of the small secondary cyclones 215 built in one body of an outer wall of the primary cyclone 214 are arranged on a circumference of the primary cyclone 214. An upper end of each of the secondary cyclones 215 is projected higher than that of the primary cyclone 214.

Meanwhile, a lateral side of each of the secondary cyclones 215 projected higher than the upper end of the primary cyclone 214 is cut in a vertical direction to configure a second inlet 215a communicating with the first outlet 214b. An upper end of each of the secondary cyclones 215 is open to configure a second outlet 215b.

In particular, the air introduced into the second inlet 215a flows spirally along an inner wall of the secondary cyclone 215.

Preferably, a guide vane 215c is built in one body of an outer sidewall of the second inlet 215a to extend toward the first outlet 214b and to extend from an outer circumference of the secondary cyclone 215 in a tangential direction.

Meanwhile, the secondary cyclone 215 includes a cone portion 215d having a decreasing diameter downwardly. A lower end of the secondary cyclone 215 is vertically perforated to discharge particles such as dust and the like.

In this case, the secondary cyclones 215 are built in one body to be adjacent to one another. Hence, air is prevented from leaking between the secondary cyclones 215.

The dust collecting container cover 220 is mounted on the secondary cyclones 215.

Third outlets 221, which are vertically perforated, are provided to a rim of the dust collecting container cover 220 to oppose the second outlets 215b of the secondary cyclones 215, respectively.

The upper cover 230 having an open lower end is detachably assembled to an upper part of the dust collecting container cover 220.

For this, three hanging protrusions 222 are provided to an outer circumference of the dust collecting container cover 220. And, three hanging recesses (not shown in the drawings) are provided to an inner circumference of the upper cover 230 so that the hanging protrusions 222 can be fitted into the hanging recesses, respectively. It is a matter of course that the positions and shapes of the hanging protrusions and recesses can be variously modified.

A fourth outlet (not shown in the drawings) is provided to a rear side of the upper cover 230 to discharge air to a prescribed passage provided to a rear part of the cleaner body 100. And, a prescribed space is provided within the upper cover 230 to communicate with the fourth outlet.

Preferably, a filter accommodating part is provided to the inner space of the upper cover 230 to accommodate a filter filtering off micro-dust from the air discharged via the third outlets 221.

The dust having been separated by the above-configured primary cyclone 214 and the above-configured secondary cyclones 215 is preferentially stored in a dust storing part configured by an outer wall of the dust collecting container 210 and the lower panel 211 and is then discharged outside by gravity if the lower panel 211 is open.

The dust storing part includes the primary dust storing part 212 and the secondary dust storing part 213. The primary dust storing part 212 stores the dust separated by the primary cyclone 214, whereas the secondary dust storing part 213 stores the dust separated by the secondary cyclones 215.

In this case, the primary and secondary dust storing parts 212 and 213 are connected in one body of the lower sides of the secondary cyclones 215 and are partitioned from each other by a boundary wall 216 having an approximately cylindrical shape of which radius is smaller than that of the outer wall of the dust collecting container 210.

A lower end of the boundary wall 216 is formed longer than that of the primary cyclone 214 in a lower direction to extend to a bottom of the dust collecting container 210, i.e., an upper lateral side of the lower panel 211.

Hence, the boundary wall 216 prevents the primary and secondary dust storing parts 212 and 213 from communicating with each other.

In addition to the above-explained configuration, the vacuum cleaner according to the present invention further includes an exhaust member 217 vertically provided within the primary cyclone 214 to have a multitude of perforated holes formed at its later side to communicate with the first outlet of the primary cyclone 214 and a guide rib 218 provided to the primary cyclone 214 to guide the air introduced into the first inlet 214a to the inner wall of the primary cyclone 214.

In this case, the exhaust member 217 is provided in an axial direction to a center of the primary cyclone 214 and preferably has an approximately conoid shape, of which upper end is open and of which lower end is closed, having a downwardly decreasing diameter.

This is to prevent the dust descending along the inner wall of the primary cyclone 214 from being affected by a sucking force of the exhaust member 217 since a speed of a spiral flow tends to decrease toward a lower side of the primary cyclone 214.

Preferably, the upper end of the exhaust member 217 is detachably assembled to a rim of the first outlet 214b. Preferably, a ring type sealing member (not shown in the drawings) is provided between the upper end of the exhaust member 217 and the first outlet 214b to sustain airtightness in-between.

Preferably, a scatter-preventing member 219 is provided beneath the exhaust member 217 to prevent the dust stored in the primary dust storing part 212 from being scattered.

The scatter-preventing member 219 plays a role in preventing the dust collected in the primary dust storing part 212 from ascending by a spiral flow to be introduced into the second cyclones 215.

Preferably, an upper surface of the scatter-preventing member 219 is tilted downwardly. In particular, the scatter-preventing member 219 has a shape of which diameter increases downwardly.

Meanwhile, a dust collecting container accommodating part 140 is provided to a front part of the cleaner body 100 to accommodate the dust collecting container 210. Preferably, the outer wall of the dust collecting container 210 and the boundary wall 216 within the dust collecting container 210 are formed of transparent materials so that the quantity of the dust collected within the dust collecting container 210 can be checked.

In the present embodiment, the dust collecting container 210 is downwardly loaded from the upper part of the cleaner body to facilitate a detachment/attachment operation.

For this, the dust collecting container accommodating part 140 is downwardly recessed to have an open entrance at its upper end.

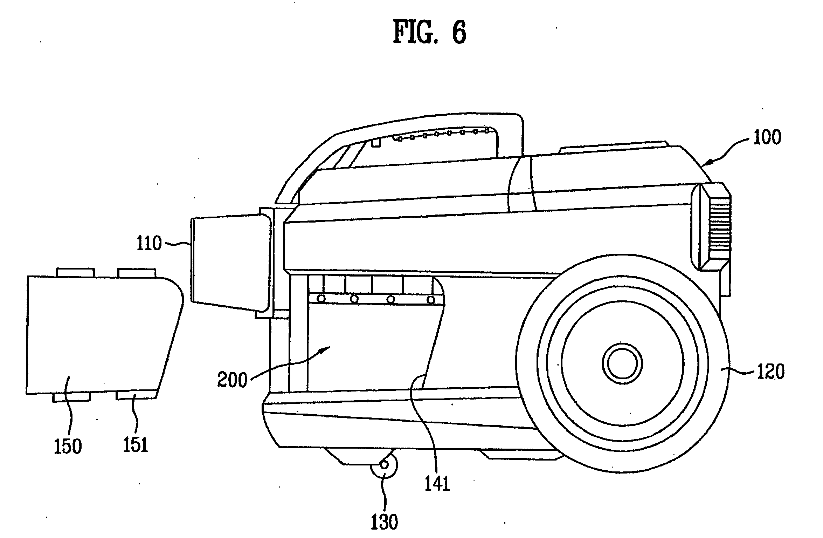

Referring to FIG. 6, at least one opening 141 is provided to a lateral side of the cleaner body 100 so that the inside of the dust collecting container 210 can be viewed from an outside of the cleaner body 100.

More preferably, a pair of openings 141 are provided to right and left sides of the cleaner body 100 by taking a front center of the cleaner body 100 as a reference, respectively. And, a pair of the openings 141 are symmetrically provided to facilitate a user to view the quantity of the dust stored in the dust collecting container 210.

The hose connecting part 110 is provided to the upper front side of the cleaner body 100 to connect the hose that makes the intake nozzle and the dust collector communicate with each other. In this case, the hose connecting part 110 is provided to a front center of the cleaner body 100.

Hence, the openings 141 are symmetrically provided to both sides of the hose connecting part 110 provided to the front side of the dust collecting container accommodating part 140, respectively.

A transparent shield window 150 is provided to each of the openings 141 to shield the corresponding opening 141.

In this case, the shield window 150 can be built in one body of a sidewall of the dust collecting container accommodating part 140. The present embodiment proposes the shield window 150 that is separately manufactured to enable a replaceable assembly.

For the fixation of the shield window 150, locking protrusions 151 are provided to upper and lower ends of the shield window 150. And, locking recesses (not shown in the drawing) are provided to upper and lower rims of the corresponding opening 141 to oppose the locking protrusions 151, respectively.

Each of the shield windows is configured to have a curvature. Preferably, each of the shield windows 150 is outwardly convex while loaded in the corresponding opening 141.

This is because the shield window 150 can protect the outer wall of the dust collecting container 210 and facilitates an external shock to be dispersed.

An operation of the vacuum cleaner according to the present invention is explained as follows.

First of all, once the vacuum cleaner is driven, the external polluted air is introduced into the primary cyclone 214 via the intake nozzle and the connecting pipe.

The air introduced into the primary cyclone 214 is not directly introduced into the exhaust member 217 by the first inlet 214a and the guide rib 218 but is guided in the direction tangential to the inner wall of the primary cyclone 214 to form the spiral flow.

According to the cyclone principle, the relatively large and heavy dust is separated and falls to be stored in the primary dust storing part 212. The dust stored in the primary dust storing part 212 is prevented from being scattered by the scatter-preventing member 219 and the curved boundary wall 216.

The air, from which the relatively large dust was separated, is discharged to the first outlet 214b communicating with a multitude of the perforated holes provided to the lateral side of the exhaust member 217 and is then introduced into a plurality of the secondary cyclones 215 for dust separation.

The air, from which the relatively small dust was separated, is introduced into the upper cover 230 via the second outlets 215b and the third outlets 221.

The air introduced into the upper cover 230 is filtered by the filter and is then discharged to a rear side via the fourth outlet 232. The air discharged from the fourth outlet 232 passes through the prescribed passage provided to the rear part of the cleaner body and is then discharged outside the cleaner body.

If it is checked that an excessive quantity of the dust is collected within the dust collecting container 210 via the opening 141 and shield window 150 provided to the lateral side of the cleaner body 100, the dust collecting container 210 is upwardly unloaded. The lower panel 211 of the dust collecting container 210 is then opened to discharge the dust collected in the dust collecting container 210.

Accordingly, the present invention provides the following effects or advantages.

First of all, in the vacuum cleaner according to the present invention, since the quantity of the dust collected in the dust collecting container is easily checked due to the opening provided to the lateral side of the cleaner body, the particles can be appropriately discharged by unloading the dust collecting container. And, the degradation of the dust collecting performance of the vacuum cleaner due to the excessive quantity of the collected dust can be prevented.

Secondly, in the vacuum cleaner according to the present invention, the transparent shield window shielding the corresponding opening can protect the dust collecting container from an external shock.

Thirdly, in the vacuum cleaner according to the present invention, since the opening is shielded by the shield window, the noise generated from the dust collector can be cut off.

Finally, in the dust collector of the vacuum cleaner according to the present invention, a plurality of the secondary cyclones are provided to the circumference of the primary cyclone, the dust collector can have a compact configuration and dust collecting performance is enhanced.

## Claims

1. A vacuum cleaner comprising:
a dust collecting container (210) for collecting dust by separating dust from an introduced air; and
a cleaner body (100) accommodating the dust collecting container (210), the cleaner body (100) comprising:
a dust collecting container accommodating part (140) accommodating the dust collecting container (210);
one or more openings (141) provided to at least one lateral side of the cleaner body (100) to enable an inside of the dust collecting container (210) to be viewed from an outside of the cleaner body (100); and
one or more transparent shield windows (150) provided ,to the one or more openings (141) to shield said opening(s) (141), respectively;
**characterized in that**
the dust collecting container (210) comprises:
an outer wall;
a primary cyclone (214) for separating particles according to a cyclone principle;
a plurality of secondary cyclones (215) provided along a circumference of the primary cyclone (214); and
a dust storing part having primary and secondary dust storing parts (212,213) provided under the primary and secondary cyclones (214,215) and partitioned from each other by a boundary wall (216) to store the particles separated by the primary and secondary cyclones (214,215), respectively,
wherein the outer wall of the dust collecting container (210) and the boundary wall (216) within the dust collecting container (210) are formed of transparent materials, and
the shield window(s) (150) is/are removably provided to the respective opening(s) (141).

2. The vacuum cleaner of claim 1, wherein the dust collecting container accommodating part (140) is provided to a front side of the cleaner body (100) to have an entrance provided to an upper end of the dust collecting container accommodating part (140) so that the dust collecting container (210) can be loaded from an upper part of the dust collecting container accommodating part (140).

3. The vacuum cleaner of claim 1 or 2, wherein a pair of said openings (141) are symmetrically provided to right and left lateral sides of the cleaner body (100), respectively.

4. The vacuum cleaner of any one of claims 1 to 3, the cleaner body (100) further comprising a hose connecting part (110) provided to an upper front side of the cleaner body (100) to be connected to a hose making an intake nozzle communicate with a dust collector loaded in the cleaner body (100).

5. The vacuum cleaner of any one of claims 1 to 4, wherein the shield window(s) (150) has/have a prescribed curvature.

6. The vacuum cleaner of any one of claims 1 to 5, wherein the dust collecting container (210) includes a lower panel (211) configuring a bottom of the dust collecting container (210) to support the particles collected within the dust collecting container (210) wherein the lower panel (211) can be opened/closed.

## Patentansprüche

1. Ein Staubsauger mit:
einem Staubsammelbehälter (210) zum Sammeln von Staub durch Abtrennen von Staub aus eingebrachter Luft, und
einem Reinigerkörper (100), der den Staubsammelbehälter (210) aufnimmt, wobei der Reinigerkörper (100) aufweist:
einen Staubsammelbehälter-Aufnahmeteil (140), der den Staubsammelbehälter (210) aufnimmt,
eine oder mehrere Öffnung(en) (141), die an mindestens einer lateralen Seite des Reinigerkörpers (100) vorgesehen ist/sind, um das Betrachten einer Innenseite des Staubsammelbehälters (210) von einer Außenseite des Reinigerkörpers (100) zu ermöglichen, und
ein oder mehrere transparente(s) Abschirmfenster (150), das bzw. die an der einen oder den mehreren Öffnungen (141) zum Abschirmen der Öffnung(en) (141) jeweils vorgesehen ist/sind,
**dadurch gekennzeichnet, dass**
der Staubsammelbehälter (210) aufweist
eine Außenwand,
ein Primär-Zyklon (214) zum Abtrennen von Teilchen gemäß einem Zyklonprinzip,
eine Vielzahl von Sekundär-Zyklonen (215), die entlang einem Umfang des Primär-Zyklons (214) vorgesehen sind, und
ein Staubspeicherteil mit Primär- und Sekundär-Staubspeicherteilen (212,213), die unter den Primär- und Sekundär-Zyklonen (214,215) vorgesehen und voneinander durch eine Trennwand (216) partitioniert sind, um die durch die Primär- und Sekundär-Zyklone (214,215) abgetrennten Teilchen jeweils zu speichern,
wobei die Außenwand des Staubsammelbehälters (210) und die Trennwand (216) innerhalb des Staubsammelbehälters (210) aus transparenten Materialien hergestellt sind, und
das bzw. die Abschirmfenster (150) entfernbar an der bzw. den jeweiligen Öffnung(en) (141) vorgesehen ist/sind.

2. Der Staubsauger gemäß Anspruch 1, wobei der Staubsammelbehälter-Aufnahmeteil (140) zu einer Vorderseite des Reinigerkörpers (100) vorgesehen ist, um einen an einem oberen Ende des Staubsammelbehälter-Aufnahmeteils (140) vorgesehenen Zugang zu haben, derart, dass der Staubsammelbehälter (210) von einem oberen Teil des Staubsammelbehälter-Aufnahmeteils (140) geladen werden kann.

3. Der Staubsauger gemäß Anspruch 1 oder 2, wobei ein Paar der Öffnungen (141) symmetrisch jeweils an rechten und linken lateralen Seiten des Reinigerkörpers (100) vorgesehen sind.

4. Der Staubsauger gemäß einem der Ansprüche 1 bis 3, wobei der Reinigerkörper (100) ferner ein Schlauch-Verbindungsteil (110) aufweist, das an einer oberen Vorderseite des Reinigerkörpers (100) vorgesehen ist, um mit einem Schlauch verbunden zu werden, um eine Ansaugdüse in Verbindung mit einem in den Reinigerkörper (100) geladenen Staubsammler zu bringen.

5. Der Staubsauger gemäß einem der Ansprüche 1 bis 4, wobei das bzw. die Abschirmfenster (150) eine vorbestimmte Krümmung besitzt/besitzen.

6. Der Staubsauger gemäß einem der Ansprüche 1 bis 5, wobei der Staubsammelbehälter (210) eine untere Platte (211) aufweist, die einen Boden des Staubsammelbehälters (210) konfiguriert, um die in dem Staubsammelbehälter (210) gesammelten Teilchen zu tragen, wobei die untere Platte (211) geöffnet/geschlossen werden kann.

## Revendications

1. Aspirateur comprenant :
un conteneur recueillant la poussière (210) pour recueillir la poussière en séparant la poussière de l'air introduit ; et
un corps d'aspirateur (100) logeant le conteneur recueillant la poussière (210), le corps d'aspirateur (100) comprenant :
une partie de logement du conteneur recueillant la poussière (140) logeant le conteneur recueillant la poussière (210) ;
une ou plusieurs ouvertures (141) prévue(s) sur au moins un côté latéral du corps d'aspirateur (100) pour permettre à un intérieur du conteneur recueillant la poussière (210) d'être vu d'un extérieur du corps d'aspirateur (100) ; et
un ou plusieurs hublots transparent(s) (150) prévu(s) au niveau d'une ou de plusieurs ouvertures (141) pour protéger ladite / lesdites ouverture(s) (141), respectivement,
**caractérisé en ce que** le conteneur recueillant la poussière (210) comprend :
une paroi externe ; un cyclone principal (214) pour séparer les particules selon un principe de cyclone ;
une pluralité de cyclones secondaires (215) prévus selon la circonférence du cyclone principal (214) ; et
une partie stockant la poussière ayant des parties de stockage de la poussière principale et secondaires (212, 213) prévues sous les cyclones primaire et secondaires (214, 215) et séparées les unes des autres par une paroi limite (216) pour stocker les particules séparées par les cyclones primaire et secondaires (214, 215), respectivement,
dans lequel la paroi externe du conteneur recueillant la poussière (210) et la paroi limite (216) à l'intérieur du conteneur recueillant la poussière (210) sont formés de matières transparentes, et
le / les hublots (150) est / sont prévu(s) de façon amovible sur la / les ouverture(s) respective(s) (141).

2. Aspirateur selon la revendication 1, dans lequel la partie logeant le conteneur recueillant la poussière (140) est prévue sur un côté avant du corps de l'aspirateur (100) pour avoir une entrée prévue à une extrémité supérieure de la partie logeant le conteneur recueillant la poussière (140) de sorte que le conteneur recueillant la poussière (210) peut être chargé depuis une partie supérieure de la partie logeant le conteneur recueillant la poussière (140).

3. Aspirateur selon la revendication 1 ou 2, dans lequel deux desdites ouvertures (141) sont prévues symétriquement sur les côtés latéraux droit et gauche du corps d'aspirateur (100), respectivement.

4. Aspirateur selon l'une quelconque des revendications 1 à 3, le corps d'aspirateur (100) comprenant en outre une partie de raccordement de tuyau (110) prévue sur un côté avant supérieur du corps d'aspirateur (100) pour être raccordée à un tuyau faisant communiquer une buse d'admission avec un collecteur de poussière chargé dans le corps d'aspirateur (100).

5. Aspirateur selon l'une quelconque des revendications 1 à 4, dans lequel la / les hublot(s) (150) a / ont une courbure prescrite.

6. Aspirateur selon l'une quelconque des revendications 1 à 5, dans lequel le conteneur recueillant la poussière (210) comprend un panneau inférieur (211) formant un fond du conteneur recueillant la poussière (210) pour supporter les particules recueillies à l'intérieur du conteneur recueillant la poussière (210) dans lequel le panneau inférieur (211) peut être ouvert / fermé.
